# FASCICULE DE BREVET EUROPEEN

(11) **EP 4 568 886 B1**
(45) Date de publication et mention de la délivrance du brevet: **30.09.2026**
(21) Numéro de dépôt: 23758703.5
(22) Date de dépôt: 07.08.2023
(51) Int. Cl.: B64C 11/06, B64C 11/30, F01D 7/00, F04D 29/32

(54) **HELICE POUR UNE TURBOMACHINE D'AERONEF**
PROPELLER FÜR EIN FLUGZEUGTURBINENTRIEBWERK
PROPELLER FOR AN AIRCRAFT TURBINE ENGINE

(30) Priorité: 09.08.2022 FR 2208200
(43) Date de publication de la demande: 18.06.2025
(73) Titulaire: SAFRAN AIRCRAFT ENGINES, 75015 Paris (FR)
(72) Inventeur: COTTET, Clément, 77550 MOISSY-CRAMAYEL (FR); JABLONSKI, Laurent, 77550 MOISSY-CRAMAYEL (FR); SERVANT, Régis Eugène Henri, 77550 MOISSY-CRAMAYEL (FR); LALOY, Timothée Jean Marie, 77550 MOISSY-CRAMAYEL (FR); AABI, Mouhsine, 77550 MOISSY-CRAMAYEL (FR)
(74) Mandataire: Gevers & Orès
(86) Numéro de dépôt international: PCT/FR2023/051248
(87) Numéro de publication internationale: WO 2024/033590

(56) Documents cités:
- WO-A1-2022/018355
- FR-A1- 3 017 163
- FR-A1- 3 098 789
- US-A1- 2017 313 404

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'état de l'art comprend notamment les documents FR-A1-3 017 163, FR-A1-3 080 322, WO-A1-2022/018355, US-A1-2017/313404, FR-A1-3 098 789 et WO-A1-2022/018353.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (*By Pass Ratio*), ce qui se traduit par une augmentation de son diamètre externe et donc de l'envergure des aubes. Or l'augmentation du BPR va de pair avec la réduction du FPF (*Fan Pressure Ratio*). Par conséquent, un système de changement de pas (aube à calage variable) est généralement requis pour que l'hélice soit opérable sur tout le domaine de vol.

Il existe plusieurs technologies d'attache d'une aube d'hélice à calage variable et plusieurs technologies de commande du calage angulaire d'une aube d'hélice de ce type.

Une hélice comprend en général un moyeu qui porte des systèmes de retenue des aubes et de commande du calage angulaire de ses aubes. Le moyeu a une forme générale annulaire ou polygonale autour d'un premier axe qui est l'axe longitudinal de la turbomachine, et comprend des orifices répartis autour de ce premier axe et dans lesquels sont logés les pieds des aubes et les systèmes précités.

Chacun de ces orifices a une orientation sensiblement radiale par rapport au premier axe et reçoit des paliers de guidage du pied d'une aube autour d'un second axe radial par rapport au premier axe, et qui est un axe de calage de l'aube correspondante.

Dans le cadre de la présente invention, chacune des aubes de l'hélice comprend une pale reliée à un pied, le pied de chaque aube étant monté dans un des orifices du moyeu et dans les paliers de cet orifice, et étant retenu dans cet orifice par un système de retenue. Chaque pied est également associé à un système de commande de son calage angulaire. Les orifices du moyeu destinés à recevoir les pieds des aubes sont traversants en direction radiale de façon à autoriser le montage de l'hélice et en particulier des paliers de guidage selon une cinématique particulière. Selon cette cinématique, le pied de chaque aube est engagé dans l'orifice correspondant du moyeu par translation le long de l'axe de calage de cette aube, radialement de l'extérieur vers l'intérieur vis-à-vis du premier axe. Le pied de l'aube est ensuite relié au système de commande qui peut être logé à l'intérieur du moyeu.

Les principaux problèmes techniques liés à cette technologie sont notamment dus au pied de l'aube qui est réalisé de manière intégrale avec la pale.

Ceci engendre par exemple un problème de masse lié au nombre de pièces du système de retenue du pied d'aube. Pour pouvoir démonter l'aube indépendamment des paliers de guidage, il est en effet nécessaire de prévoir un nombre de pièces et d'interfaces élevés. Ce nombre de pièces élevé induit une masse importante et une certaine complexité de montage. Au contraire, une diminution de masse au niveau de l'hélice est recherchée en vue de diminuer la consommation en carburant et donc de préserver l'environnement et de limiter les impacts sur le réchauffement climatique. Un autre problème concerne l'accessibilité de son système de retenue et de précharge du pied d'aube. Le système de retenue doit en effet assurer une certaine précharge du pied le long de l'axe de calage. Le système de retenue n'est pas facilement accessible et nécessite en général pour son montage l'utilisation d'un outillage encombrant et complexe qui rend donc le procédé de montage/démontage d'une aube très complexe.

L'invention apporte une solution à au moins une partie de ces problèmes techniques.

### Résumé de l'invention

L'invention concerne une hélice pour une turbomachine d'aéronef, cette hélice comportant ;
- un moyeu s'étendant autour d'un premier axe et comportant des orifices répartis autour de ce premier axe, chacun de ces orifices ayant une orientation sensiblement radiale par rapport audit premier axe et traversant ledit moyeu,
- des aubes comportant chacune une pale et un pied, les pieds des aubes étant respectivement engagés dans les orifices du moyeu et chacune des aubes comportant un axe de calage sensiblement radial par rapport audit premier axe,
- des paliers de guidage des pieds des aubes dans les orifices du moyeu autour desdits axes de calage, le pied de chacune des aubes étant guidé par au moins deux paliers, respectivement radialement externe et interne vis-à-vis dudit premier axe, montés autour du pied et à l'intérieur de l'orifice correspondant du moyeu, et
- des systèmes de retenue des pieds des aubes dans les orifices du moyeu le long desdits axes de calage,

caractérisée en ce que le pied de chacune des aubes est configuré pour être engagé dans l'orifice correspondant du moyeu par translation le long de l'axe de calage de cette aube, radialement de l'extérieur vers l'intérieur vis-à-vis dudit premier axe, à l'intérieur des paliers externe et interne, le pied de chacune des aubes comportant :
      + une butée configurée pour prendre appui en direction de l'axe de calage sur le palier externe afin de retenir l'aube radialement vers l'intérieur vis-à-vis du premier axe,
      + une gorge annulaire s'étendant autour de l'axe de calage et orientée radialement vers l'extérieur par rapport à cet axe de calage, la gorge étant située radialement à l'intérieur de la butée vis-à-vis dudit premier axe, et
et en ce que le système de retenue du pied de chacune des aubes comprend :
   + un anneau, de préférence sectorisé, configuré pour être engagé dans la gorge du pied de l'aube, et
   + un ensemble annulaire vis-écrou comportant une vis interne comprenant un filetage externe, et un écrou externe comportant un filetage interne de vissage sur le filetage externe de la vis interne, la vis interne étant configurée pour être montée autour du pied, entre la butée et la gorge, et pour prendre appui en direction de l'axe de calage sur l'anneau du côté opposé à la pale, et l'écrou externe étant configuré pour prendre appui en direction de l'axe de calage sur le palier interne du côté de la pale de l'aube afin de retenir l'aube radialement vers l'extérieur vis-à-vis du premier axe.

L'invention propose ainsi une configuration relativement simple du système qui assure la retenue du pied d'aube dans l'orifice du moyeu. Du côté de la pale de l'aube, le pied de l'aube comprend une butée qui prend appui directement ou indirectement sur le palier externe qui est avantageusement monté préalablement à l'insertion du pied dans l'orifice du moyeu. Du côté opposé à la pale de l'aube, le pied de l'aube comprend une gorge dans laquelle est rapporté un anneau, de préférence sectorisé. La simple coopération par butée de l'anneau avec les parois latérales de la gorge, dans la direction de l'axe de calage, suffit à assurer la retenue de l'anneau dans la gorge. Cet anneau peut avantageusement former une butée additionnelle pour le pied d'aube, qui est cette fois rapporté sur le pied. Le pied de l'aube comprend en outre une zone d'accueil de l'ensemble vis-écrou, qui peut par exemple se présenter sous la forme d'une surface cylindrique externe ou d'un filetage externe. Cet ensemble vis-écrou écrou a l'avantage d'avoir une double fonction et un nombre limité de pièces. La vis interne est vissée sur le pied et coopère par butée avec l'anneau ce qui assure une rétention du pied radialement vers l'extérieur par rapport au premier axe. Ceci peut également permettre d'immobiliser axialement l'anneau dans la gorge, le long de l'axe de calage, voire également de le bloquer radialement dans la gorge vis-à-vis de cet axe. L'écrou externe est vissé sur la vis interne et coopère par butée avec le palier interne. Le pied de l'aube est donc retenu par les paliers externe et interne, par l'intermédiaire de la butée d'une part, et par l'intermédiaire de l'anneau et de l'ensemble vis-écrou d'autre part. Le nombre de pièces du système de retenue du pied est donc relativement limité dans la mesure où il peut comprendre seulement trois pièces à savoir l'anneau et les deux pièces de l'ensemble vis-écrou.

Le pied est en outre relié à un système de commande de son calage angulaire.

L'hélice selon l'invention peut comprendre une ou plusieurs des caractéristiques suivantes, prises isolément les unes des autres, ou en combinaison les unes avec les autres :
- l'anneau est sectorisé en deux morceaux et comprend deux demi-anneaux ;
- l'anneau comprend une périphérie interne logée dans la gorge et une périphérie externe située à l'extérieur de la gorge et sur laquelle la vis interne prend appui ;
- la périphérie interne de l'anneau comporte un rebord annulaire situé du côté de la pale qui est destiné à coopérer par appui avec la vis interne pour éviter à l'anneau de sortir accidentellement de la gorge ;
- la vis interne comprend un rebord annulaire qui est situé du côté opposé à la pale et qui s'étend autour de la périphérie externe de l'anneau pour éviter à l'anneau de sortir accidentellement de la gorge ;
- la vis interne et l'écrou externe comprennent chacun une série de dents orientées radialement vers l'extérieur par rapport à l'axe de calage ;
- la série de dents de l'écrou externe est située du côté de la pale de l'aube, et la série de dents de la vis interne est située du côté opposé à la pale de l'aube ;
- l'hélice comprend en outre un capot annulaire interne qui est monté autour du pied et recouvre au moins en partie le palier interne et/ou l'ensemble vis-écrou ;
- le capot interne comprend au moins deux dents qui sont configurées pour coopérer par engagement avec les séries de dents de l'ensemble vis-écrou afin de les immobiliser en rotation autour de l'axe de calage ;
   -- le capot interne a sa périphérie externe qui est en appui en direction de l'axe de calage sur le moyeu, par exemple par l'intermédiaire d'un joint annulaire ;
   -- le capot interne comprend une surface cylindrique interne de centrage qui est configurée pour coopérer avec une surface cylindrique externe complémentaire du palier interne, et par exemple d'une bague interne de ce palier interne ;
   -- la surface de centrage est située à la périphérie interne d'un voile annulaire interne du capot interne, ce voile comprenant des orifices traversants de passage de fluide et en particulier d'huile de lubrification des paliers ;
   -- le pied de chacune des aubes comprend un autre filetage externe située à une extrémité du pied opposée à la pale, le système de retenue du pied de chacune des aubes comprenant en outre une bague filetée qui est vissée sur cet autre filetage externe ;
   -- la bague filetée prend appui en direction de l'axe de calage sur une périphérie interne du capot interne, directement ou par l'intermédiaire d'un joint annulaire ;
- le pied de chacune des aubes comprend un évidement interne qui débouche radialement vers l'intérieur vis-à-vis du premier axe et qui comporte des cannelures internes s'étendant autour de l'axe de calage, l'hélice comportant en outre un système de commande du calage qui est associé au pied de chacune des aubes, le système de commande comportant un excentrique dont une douille est engagée par translation en direction de l'axe de calage à l'intérieur de l'évidement, cette douille comportant des cannelures externes configurées pour être engagées dans les cannelures internes du pied ;
   -- la douille comprend un rebord annulaire externe, et la bague filetée comprend un rebord annulaire interne qui prend appui en direction de l'axe de calage sur le rebord externe de la douille, et du côté de la pale pour retenir la douille dans l'évidement du pied ;
   -- la butée du pied de chacune des aubes est en appui direct sur le palier externe, ou est en appui sur le palier externe par l'intermédiaire d'un capot annulaire externe qui est monté autour du pied et qui recouvre au moins en partie le palier externe ;
   -- le capot externe a sa périphérie interne qui est serrée entre la butée et le palier externe, et sa périphérie externe qui est en appui en direction de l'axe de calage sur le moyeu, par exemple par l'intermédiaire d'un joint annulaire ;
- le palier externe comprend une bague externe qui prend appui en direction de l'axe de calage et du côté opposé à la pale sur une butée située dans l'orifice du moyeu, et/ou le palier interne comprend une bague externe qui prend appui en direction de l'axe de calage et du côté de la pale sur une butée située dans l'orifice du moyeu ;
- le palier externe comprend une bague interne qui prend appui en direction de l'axe de calage et du côté opposé à la pale sur une entretoise montée autour du pied et dans l'orifice du moyeu, et/ou le palier interne comprend une bague interne qui prend appui en direction de l'axe de calage et du côté de la pale sur une butée sur le pied de l'aube ou sur l'entretoise précitée ;

-- la bague interne du palier externe est en appui sur l'entretoise par l'intermédiaire d'un joint annulaire, et/ou la bague interne du palier interne est en appui sur la butée ou sur l'entretoise par l'intermédiaire d'un joint annulaire ;
-- les paliers ont des diamètres internes qui sont croissants radialement de l'intérieur vers l'extérieur vis-à-vis dudit premier axe ; ainsi, le diamètre interne du palier (radialement) interne a un diamètre interne qui est plus petit que le diamètre interne du palier (radialement) externe ;
-- l'ensemble vis-écrou est monté sur une surface cylindrique externe du pied ; en variante, la vis interne comprend en outre un filetage interne de vissage sur un filetage externe du pied ;
-- les paliers sont des paliers à roulement, par exemple à billes ou à rouleaux ; les rouleaux pouvant être coniques.

La présente invention concerne également une turbomachine, en particulier d'aéronef, comportant au moins une hélice telle que décrite ci-dessus.

La présente invention concerne enfin un procédé de montage d'une hélice telle que décrite ci-dessus, dans lequel il comprend les étapes de :
a) montage des paliers dans les orifices du moyeu,
b) insertion du pied de chacune des aubes dans l'orifice correspondant du moyeu, radialement de l'extérieur vers l'intérieur par rapport audit premier axe, jusqu'à ce que la butée du pied prenne appui sur le palier externe,
c) montage de l'ensemble vis-écrou sur le pied de l'aube, entre la butée et la gorge,
d) montage de l'anneau sectorisé dans la gorge du pied,
e) positionnement de l'ensemble vis-écrou, et en particulier de la vis interne, pour que la vis interne prenne appui sur l'anneau sectorisé,
f) vissage de l'écrou externe sur la vis interne pour que l'écrou externe prenne appui sur le palier interne.

Avantageusement, le capot externe est monté sur le palier externe entre les étapes a) et b).

Avantageusement, l'entretoise est montée dans chacun des orifices pendant l'étape a).

Avantageusement, le procédé comprend en outre, après l'étape f), une étape g) de montage du capot interne.

Avantageusement, le procédé comprend en outre, après l'étape f), une étape h) de montage du système de commande, puis une étape i) de montage de la bague filetée.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une hélice selon l'invention pour une turbomachine d'aéronef,
[Fig.2] la figure 2 est une vue à plus grande échelle d'une partie de la figure 1 et montre le pied d'une aube monté dans un orifice d'un moyeu de l'hélice,
[Fig.3a] la figure 3a est une vue à encore plus grande échelle d'une partie de la figure 2 et des systèmes de retenue et de commande du pied d'aube,
[Fig.3b] la figure 3b est une vue similaire à celle de la figure 3a et illustrant une variante de réalisation de l'invention,
[Fig.4] la figure 4 est une vue similaire à celle de la figure 2 et illustrant une variante de réalisation de l'invention,
[Fig.5] la figure 5 est une vue similaire à celle de la figure 2 et illustrant une autre variante de réalisation de l'invention,
[Fig.6] la figure 6 est une vue schématique partielle en coupe axiale et en perspective du moyeu et du système de retenue du pied d'aube de la variante de réalisation de la figure 5,
[Fig.7] la figure 7 est une vue schématique partielle en coupe axiale et en perspective du moyeu, du système de retenue, et du pied d'aube de la variante de réalisation de la figure 5,
[Fig.8] la figure 8 est une vue schématique partielle en coupe axiale et en perspective du moyeu, du système de retenue, du pied d'aube, et d'une bague filetée du système de commande de la variante de réalisation de la figure 5,
[Fig.9] la figure 9 est une vue schématique en perspective d'un double écrou et d'un capot interne pour une hélice selon l'invention,
[Fig.10] la figure 10 est vue schématique en perspective du double écrou et en coupe axiale du capot interne de la figure 9.

### Description détaillée de l'invention

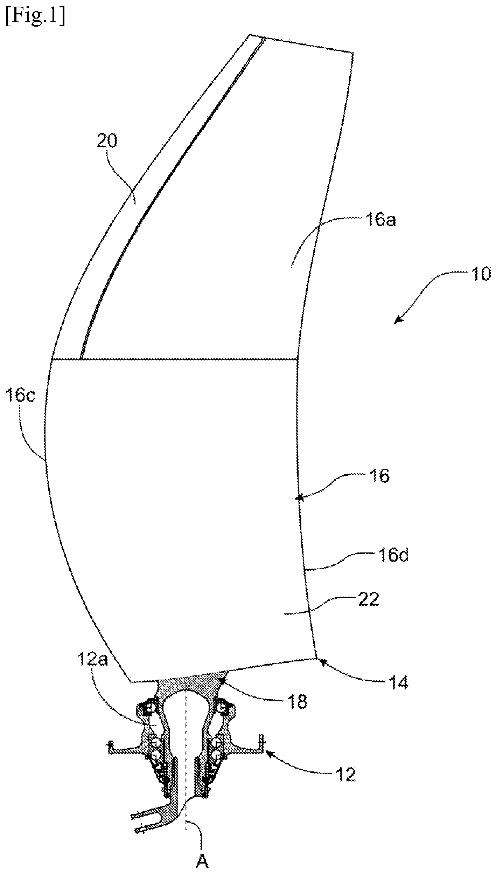

La figure 1 montre une hélice 10 pour une turbomachine d'aéronef, cette hélice 10 étant carénée ou non carénée.

L'hélice 10 comprend un moyeu 12 et des aubes 14 portés par ce moyeu 12. Le moyeu 12 a une forme générale annulaire ou polygonale et s'étend autour d'un premier axe non représenté.

Dans la figure 1, une des aubes 14 de l'hélice 10 est visible et le moyeu 12 est vue en coupe axiale, le plan de coupe passant par le premier axe du moyeu 12.

Le moyeu 12 comporte des orifices 12a répartis autour du premier axe, chacun de ces orifices 12a ayant une orientation sensiblement radiale par rapport à ce premier axe. Chaque orifice 12a traverse radialement le moyeu 12 c'est-à-dire que chaque orifice 12a débouche respectivement radialement à l'extérieur et radialement à l'intérieur.

Les aubes 14 comportent chacune une pale 16 et un pied 18. Les pieds 18 des aubes 14 sont respectivement engagés dans les orifices 12a du moyeu 12.

La pale 16 a un profil aérodynamique et comprend un intrados 16a et un extrados (non visible) qui sont reliés par un bord amont d'attaque 16c et par un bord aval de fuite 16d, les termes amont et aval faisant référence à l'écoulement des gaz autour de la pale 16 en fonctionnement.

La pale 16 a une extrémité supérieure qui est libre, appelée sommet, et une extrémité inférieure qui est reliée au pied 18.

L'aube 14 peut être réalisée en matériau composite par un procédé d'injection appelé procédé RTM (acronyme de l'anglais *Resin Transfer Molding*). Ce procédé consiste à préparer une préforme fibreuse par tissage en trois dimensions puis à disposer cette préforme dans un moule et d'y injecter une résine polymérisable telle qu'une résine époxy, qui va imprégner la préforme. Après polymérisation et durcissement de la pale 16, son bord d'attaque 16c est en général renforcé par un bouclier métallique 20 rapporté et fixé, par exemple par collage.

Le bouclier 20 peut être en titane ou alliage de titane, inox, acier, aluminium, nickel, etc. L'intrados 16a voire l'extrados de la pale 16 peut être recouvert d'un film polyuréthane 22 pour la protection à l'érosion.

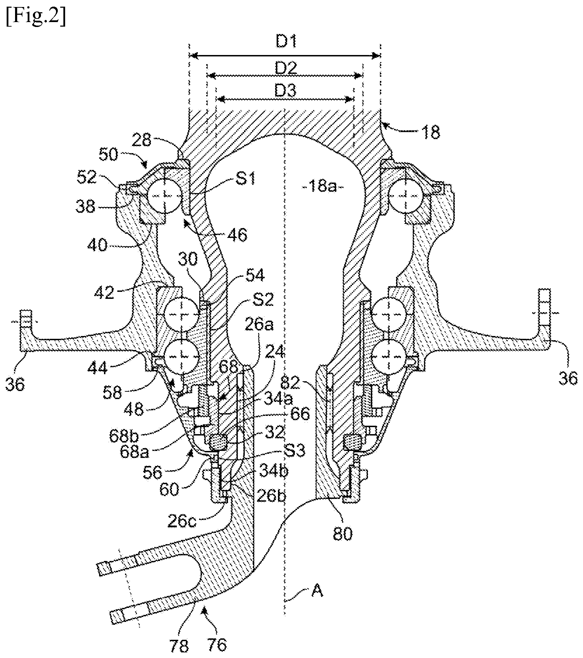

On désigne par A, l'axe d'allongement de l'aube 14 et de la pale 16 et en particulier l'axe de calage de l'aube 14, c'est-à-dire l'axe autour duquel la position angulaire de l'aube 14 est ajustée. C'est en général aussi un axe radial qui s'étend donc suivant un rayon par rapport au premier axe. Comme cela est mieux visible à la figure 2, le pied 18 est creux et comprend un évidement interne 18a dans l'exemple représenté. Le pied 18 a une forme allongée et tubulaire, son évidement interne 18a étant fermé du côté de la pale 16 et ouvert du côté opposé à la pale 16.

L'évidement 18a du pied 18 permet de réduire sa masse, la forme et les dimensions du pied 18 étant optimisés pour assurer une bonne tenue mécanique de l'aube 14 en fonctionnement.

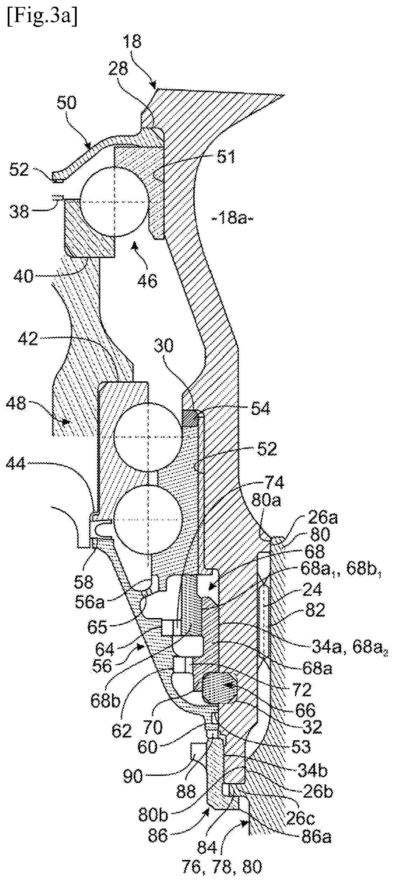

Le pied 18 comporte dans son évidement 18a des cannelures internes 24 qui sont configurées pour permettre un accouplement du pied 18 avec un système de commande du calage de l'aube autour de son axe de calage A (figures 2 et 3a).

Les cannelures 24 s'étendent autour de l'axe A. Dans l'exemple représenté, elles sont situées entre deux surfaces cylindriques internes 26a, 26b de l'évidement 18a, situées respectivement radialement à l'extérieur et à l'intérieur des cannelures 24 vis-à-vis du premier axe.

Le pied 18 de l'aube 14 comprend en outre à son extrémité libre radialement interne (vis-à-vis du premier axe), une surface annulaire 26c qui s'étend dans un plan perpendiculaire à l'axe A.

Le pied 18 de l'aube 14 comprend une ou plusieurs butées 28, 30. La ou chaque butée 28, 30 a une forme annulaire et s'étend autour de l'axe A et radialement vers l'extérieur par rapport à cet axe A.

Dans l'exemple représenté, la butée 28 est formée a saillie à une extrémité radialement externe du pied 18 vis-à-vis du premier axe, sensiblement au niveau de l'extrémité fermée de l'évidement 18a.

La butée 30 est formée a saillie sur une partie médiane du pied 18 vis-à-vis du premier axe, située entre la butée 28 et l'extrémité libre du pied 18.

Le pied 18 de l'aube 14 comprend de plus une gorge annulaire 32 qui débouche radialement vers l'extérieur et qui est ici formée au voisinage de l'extrémité libre du pied 18.

Entre la butée 28 et la gorge 32, et plus particulièrement entre la butée 30 et la gorge 32, le pied 18 comprend une surface cylindrique externe 34a pourvue ou non d'un filetage externe.

Le pied 18 de l'aube 14 comprend plusieurs surfaces cylindriques externes de centrage S1, S2 et S3 dans l'exemple représenté. Les surfaces S1, S2 et S3 ont des diamètres D1, D2 et D3 décroissants et sont réparties le long de l'axe A, radialement de l'extérieur vers l'intérieur vis-à-vis du premier axe.

La surface S1 de plus grand diamètre D1 est située entre les butées 28, 30.

La surface S2 de diamètre intermédiaire D2 est située entre la butée 30 et la surface 34a.

La surface S3 de plus petit diamètre D3 est située entre la gorge 32 et l'extrémité libre du pied 18, et plus particulièrement entre la gorge 32 et un autre filetage externe 34b du pied 18. Le filetage 34b a un diamètre inférieur à celui de la surface 34a ou du filetage prévu sur cette surface.

La butée 28 est située à l'extrémité radialement externe de la surface S1 par rapport au premier axe. La butée 30 est située à l'extrémité radialement externe de la surface S2 par rapport au premier axe.

Le moyeu 12 peut comprendre des brides annulaires de fixation 36 à chacune de ses extrémités axiales, comme cela est visible à la figure 2. Dans l'exemple représenté, chacun des orifices 12a du moyeu 12 comprend des butées 38, 40, 42, 44.

La ou chaque butée 38, 40, 42, 44 a une forme annulaire et s'étend autour de l'axe A et radialement vers l'intérieur par rapport à cet axe A.

Les butées 38, 40, 42, 44 sont respectivement disposés les unes après les autres le long de l'axe de calage A. Il y a ainsi une butée 38 radialement externe, une butée radialement interne 44 et deux butées intermédiaires 40, 42.

La butée 38 a un plus grand diamètre que la butée 40, et la butée 44 a un plus grand diamètre que la butée 42.

Les butées intermédiaires 40, 42 permettent d'accueillir des paliers 46, 48 de guidage des pieds 18 des aubes 14.

Les paliers 46, 48 sont ici au nombre de deux et sont montés dans l'orifice 12a du moyeu en étant disposés radialement l'un à l'extérieur de l'autre. On désigne ainsi par palier externe 46, le palier situé radialement à l'extérieur, et par palier interne 48, le palier situé radialement à l'intérieur.

Les paliers 46, 48 sont montés à l'intérieur de l'orifice 12a en prenant appui axialement (vis-à-vis de l'axe A) sur les butées intermédiaires 40, 42. Les paliers 46, 48 sont montés autour du pied 18, et en particulier autour des surfaces S1 et S2, en prenant appui axialement (vis-à-vis de l'axe A) sur les butées 28, 30.

Avantageusement, une pièce intermédiaire est prévue entre le palier 48 et le pied d'aube 18, et en particulier entre la bague interne du palier 48 et la surface S2. Il s'agit d'une frette montée serrée sur le pied d'aube 18 qui permet d'avoir un matériau plus dur que celui (par exemple en titane) du pied 18 en tant que portée de roulement. En effet, la bague interne du palier 48 ne peut pas avoir un frettage important sur son axe car elle est déplacée lors de la mise en précharge. De ce fait, pour éviter un phénomène de *fretting* (arrachement de matière qui aurait pour conséquence une amorce de rupture sur le pied d'aube), on peut ajouter cette pièce intermédiaire dure. Le palier externe 46 est configuré pour être engagé dans l'orifice 12a depuis l'extérieur du moyeu 12, en le déplaçant radialement de l'extérieur vers l'intérieur, jusqu'à venir en appui sur la butée 40. Le palier 46 est ici un palier à billes et à contact oblique et c'est sa bague externe qui prend appui sur la butée 40.

Le palier interne 48 est configuré pour être engagé dans l'orifice 12a depuis l'intérieur du moyeu, en le déplaçant radialement de l'intérieur vers l'extérieur, jusqu'à venir en appui sur la butée 42. Le palier 48 est ici un palier à billes, et en particulier à double rangée de billes, et à contact oblique et c'est sa bague externe qui prend appui sur la butée 42.

Comme on le voit aux figures 2 et 3a, le pied 18 de l'aube 14 est configuré pour être engagé dans l'orifice 12a par translation le long de l'axe A, radialement de l'extérieur vers l'intérieur vis-à-vis du premier axe, à l'intérieur des paliers 46, 48, jusqu'à ce que la butée 28 prenne appui axialement (par rapport à l'axe A) sur le palier 46, et en particulier sa bague interne, et que la butée 30 prenne appui axialement (par rapport à l'axe A) sur le palier 48, et en particulier sa bague interne. Les paliers 46, 48, et en particulier leurs bagues internes, sont alors montés sur les surfaces S1 et S2.

On comprend donc que le palier externe 46 a un diamètre interne supérieur au diamètre interne du palier interne 48 pour permettre le montage du pied 18 dans l'orifice 12a, dans la mesure où les paliers 46, 48 sont montés préalablement au pied 18 dans l'exemple représenté.

La butée 28 du pied 18 peut être en appui direct (le long de l'axe A) sur le palier externe 46 et en particulier sa bague interne. Dans l'exemple représenté, la butée 28 est en appui sur le palier externe 46 par l'intermédiaire d'un capot annulaire externe 50 qui est monté autour du pied et qui recouvre au moins en partie le palier externe 46.

Ce capot externe 50 a sa périphérie interne qui est serrée entre la butée 28 et le palier externe 46, et en particulier sa bague interne. La périphérie externe du capot 50 est en appui en direction de l'axe A sur le moyeu 12 et en particulier sur la butée 38, soit directement soit par l'intermédiaire d'un joint annulaire 52 comme illustré dans le dessin.

La butée 30 du pied 18 peut être en appui direct (le long de l'axe A) sur le palier interne 48 et en particulier sa bague interne. Dans l'exemple représenté, la butée 30 est en appui sur le palier interne 48 par l'intermédiaire d'un joint annulaire 54.

Un capot annulaire interne 56 peut également être monté autour du pied 18 et recouvrir au moins en partie le palier interne 48.

Le capot interne 56 a sa périphérie externe qui est en appui en direction de l'axe A sur le moyeu 12 et en particulier sur la butée 44, soit directement soit par l'intermédiaire d'un joint annulaire 58 comme illustré dans le dessin. En variante, la périphérie externe du capot 56 pourrait être en appui dans cette direction sur le palier interne 48, et en particulier sur la bague externe de ce palier.

Le capot 56 a sa périphérie interne qui est en appui radialement vis-à-vis de l'axe A sur le pied 18, au voisinage de son extrémité libre, soit directement soit par l'intermédiaire d'un joint annulaire 60 comme illustré dans le dessin.

Dans l'exemple représenté, le capot interne 56 comprend au moins deux dents 62, 64 orientées radialement vers l'axe A.

Le capot interne 56 peut en outre comprendre une surface cylindrique interne de centrage 56a qui est configurée pour coopérer avec une surface cylindrique externe complémentaire du palier interne 48, et par exemple de la bague interne de ce palier. Cette surface 56a peut être située à la périphérie interne d'un voile annulaire interne du capot 56. Ce voile peut comprendre des orifices traversants 65 de passage de fluide et en particulier d'huile de lubrification des paliers 46, 48 (figure 3a).

Le pied 18 est retenu dans l'orifice 12a du moyeu 12 par un système de retenue qui comprend pour l'essentiel un anneau 66 et un ensemble vis-écrou 68. C'est cet ensemble vis-écrou 68 qui permet d'appliquer une précharge au pied de l'aube.

L'anneau 66 est monté autour du pied 18 de l'aube et s'étend autour de l'axe A. L'anneau 66 est sectorisé et comprend donc des secteurs d'anneau disposés circonférentiellement bout à bout autour de l'axe A. Le nombre de secteurs n'est pas limitatif et peut être limité à deux. L'anneau 66 comprend alors deux demi anneaux.

En variante, l'anneau pourrait être continu et ne pas être sectorisé. Il pourrait alors comprendre une fente pour autoriser une déformation élastique de l'anneau par écartement de ses extrémités longitudinales

L'anneau 66 est configuré pour être engagé dans la gorge 32 du pied 18. On comprend que c'est la sectorisation de l'anneau 66 qui permet son montage dans la gorge 32. L'anneau 66 comprend une périphérie interne logée dans la gorge 32 et une périphérie externe destinée à rester à l'extérieur de la gorge 32 pour former une butée axiale (vis-à-vis de l'axe A).

L'ensemble vis-écrou 68 comporte une vis interne 68a et un écrou externe 68b. La vis interne 68a comporte un filetage externe 68a1 et peut comprendre un filetage interne 68a2 ou à la place une surface cylindrique interne. Lorsque la vis 68a a une surface cylindrique interne, cette dernière est destinée à coopérer par glissement avec la surface 34a du pied lors du montage et du positionnement de l'ensemble 68 sur le pied. Lorsque la vis 68a comprend un filetage interne 68a2, le pied comprend un filetage sur sa surface 34a et le filetage 68a2 sert au vissage de l'écrou 68a sur le filetage du pied 18.

L'écrou externe 68b comporte un filetage interne 68b1 de vissage sur le filetage externe 68a1 de la vis interne 68a.

Le positionnement (par simple coulissement ou vissage/dévissage) de la vis interne 68a sur le pied 18 permet de la déplacer axialement (vis-à-vis de l'axe A) sur le pied 18 et de la positionner le long de l'axe A. La vis 68a est apte à prendre appui en direction de l'axe A sur l'anneau 66 du côté opposé à la pale 16.

Le vissage/dévissage de l'écrou externe 68b permet de le déplacer axialement (vis-à-vis de l'axe A) sur l'écrou 68a et de le positionner le long de l'axe A. L'écrou externe 68b est apte à prendre appui en direction de l'axe A sur le palier interne 48, et en particulier sur sa bague interne, du côté de la pale 16.

Le double appui de l'ensemble vis-écrou 68, respectivement sur l'anneau 66 et le palier 48, et le vissage de l'écrou externe 68b sur la vis interne 68a, permettent d'appliquer une certaine précharge du pied 18 de l'aube par le système de retenue.

Dans l'exemple représenté aux figures 2 et 3a, la vis interne 68a comprend un rebord annulaire 70 qui est situé du côté opposé à la pale 16 et qui s'étend autour de la périphérie externe de l'anneau 66 pour éviter à l'anneau 66 de sortir accidentellement de la gorge 32.

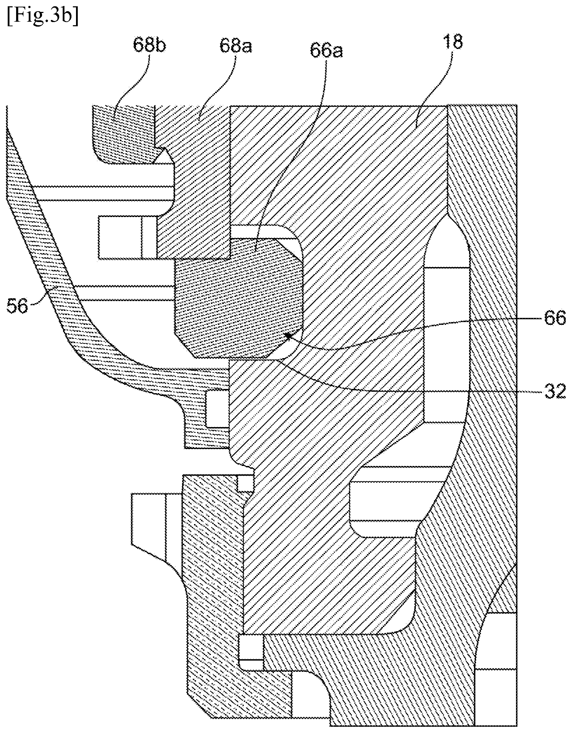

Dans la variante de la figure 3b, la périphérie interne de l'anneau 66 peut comporter un rebord annulaire 66a situé du côté de la pale 16, qui est destiné à coopérer par appui avec la vis interne 68a pour éviter à l'anneau 66 de sortir accidentellement de la gorge 32.

La vis 68a et l'écrou 68b comprennent chacun une série de dents 72, 74 orientées radialement vers l'extérieur par rapport à l'axe A et configurées pour coopérer avec les dents 62, 64 du capot interne 56 afin d'immobiliser en rotation l'ensemble 68 autour de l'axe A.

La série de dents 74 de l'écrou externe 68b est située du côté de la pale 16 et est configurée pour coopérer avec la dent 64 du capot 56. La série de dents 72 de la vis interne 68a est située du côté opposé à la pale 16 et est configurée pour coopérer avec la dent 62 du capot 56.

Dans l'exemple représenté, la série de dents 72 a un diamètre externe inférieur à celui de la série de dents 74.

L'hélice 10 comporte en outre un système 76 de commande du calage de l'aube 14, qui est associé au pied 18 de cette aube. L'hélice 10 comprend donc autant de systèmes de commande 76 que d'aubes 14 de cette hélice. Chaque système de commande 76 comporte un excentrique 78 dont une douille 80 est engagée par translation le long de l'axe A à l'intérieur de l'évidement 18a du pied 18, radialement de l'intérieur vers l'extérieur vis-à-vis du premier axe.

La douille 80 comporte des cannelures externes 82 configurées pour être engagées dans les cannelures internes 24 du pied 18.

La douille 80 comporte en outre des surfaces cylindriques externes 80a, 80b de centrage coopérant avec les surfaces 26a, 26b de l'évidement 18a lors de l'insertion de la douille 80 dans l'évidement 18a. Ces surfaces 80a, 80b sont situées de part et d'autre des cannelures 82 le long de l'axe A.

Dans l'exemple représenté, la douille 80 comprend également un rebord annulaire externe 84 (figure 3a).

Une bague filetée 86 est vissée sur le filetage 34b du pied, à son extrémité libre, et comprend un rebord annulaire interne 86a qui prend appui en direction de l'axe A sur le rebord externe 84 de la douille 80, et en direction de la pale 16 pour retenir la douille 80 dans l'évidement 18a du pied 18.

La bague filetée 86 prend appui en direction de l'axe A sur la périphérie interne du capot interne 56, directement ou par l'intermédiaire d'un joint annulaire 88.

La bague filetée 86 peut comprendre une série de dents 90 s'étendant radialement vers l'extérieur vis-à-vis de l'axe A, pour permettre la mise en prise de la bague 86 avec un outil de vissage et dévissage de la bague.

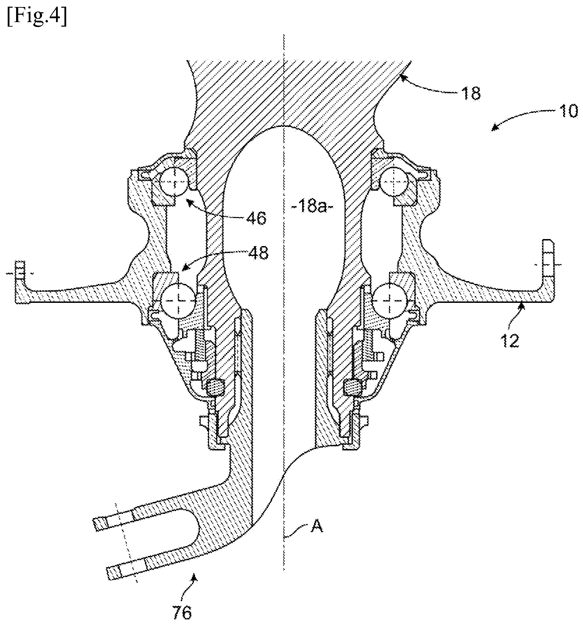

La variante de réalisation de la figure 4 diffère du précédent mode de réalisation par le fait que le palier interne 48 à double rangée de roulement est remplacé par un palier interne 48 à simple rangée de roulement. Ceci permet de réduire la longueur du palier 48, le long de l'axe A, et donc de réduire l'encombrement axial de l'ensemble le long de cet axe. L'évidement 18a du pied 18 a en outre une forme différente en section.

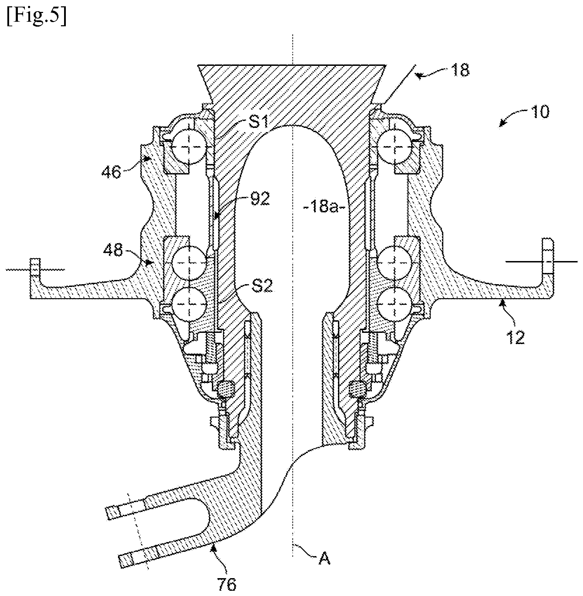

La variante de réalisation de la figure 5 diffère du premier mode de réalisation par le fait que l'hélice 10 comprend en outre une entretoise 92 annulaire ou tubulaire qui est montée autour du pied 18, et entre les paliers 46, 48. L'entretoise 92 s'étend le long de l'axe A et comprend une extrémité située du côté de la pale 16, qui prend appui axialement (le long de l'axe A), directement ou via une cale de précharge, sur le palier externe 46 et en particulier sa bague interne.

La cale de précharge est calibrée en épaisseur pour permettre d'exercer la bonne précharge sur les roulements afin qu'en fonctionnement, l'ensemble des éléments roulants des roulements gardent le contact avec leurs pistes. L'entretoise 92 comprend une extrémité opposée qui prend appui axialement (le long de l'axe A), directement ou via un joint annulaire, sur le palier interne 48 et en particulier sur sa bague interne.

Cette variante de réalisation permet de supprimer la butée 30 et donc de simplifier la réalisation du pied 18. Elle permet en outre d'avoir des surfaces S1 et S2 d'accueil des paliers 46, 48 qui ont des diamètres proches voire identiques, ce qui simplifie la conception du pied 18.

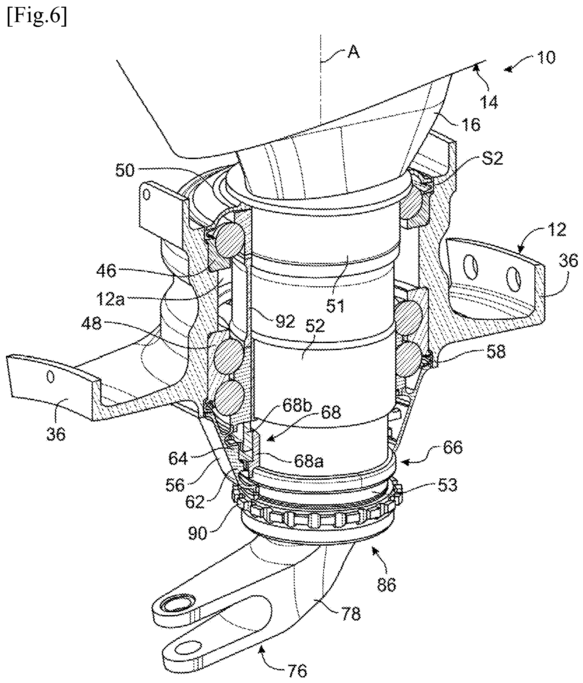

Les figures 6 et suivantes sont des vues en perspective de la variante de réalisation de la figure 5 mais qui peuvent également servir à illustrer des caractéristiques des précédents modes de réalisation.

La figure 6 par exemple montre la sectorisation de l'anneau 66 en deux demi anneaux. Elle montre également la série de dents 90 de la bague filetée 86 ainsi que la forme particulière de l'excentrique 78 qui comprend une chape de liaison à un mécanisme de commande non représenté.

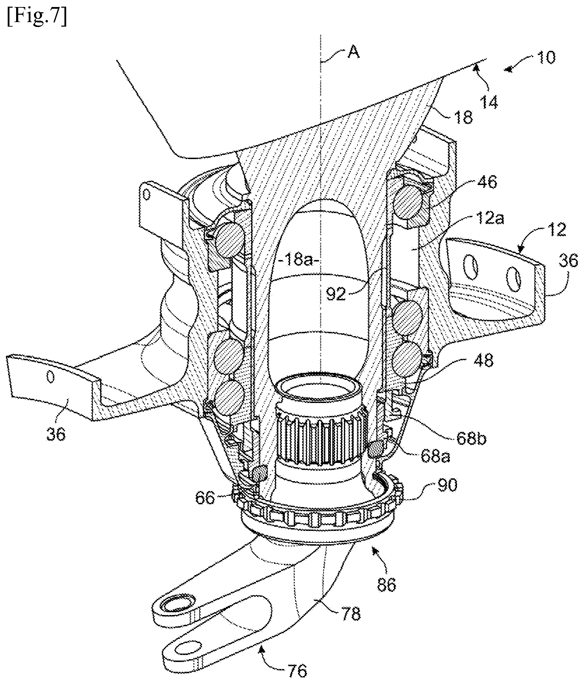

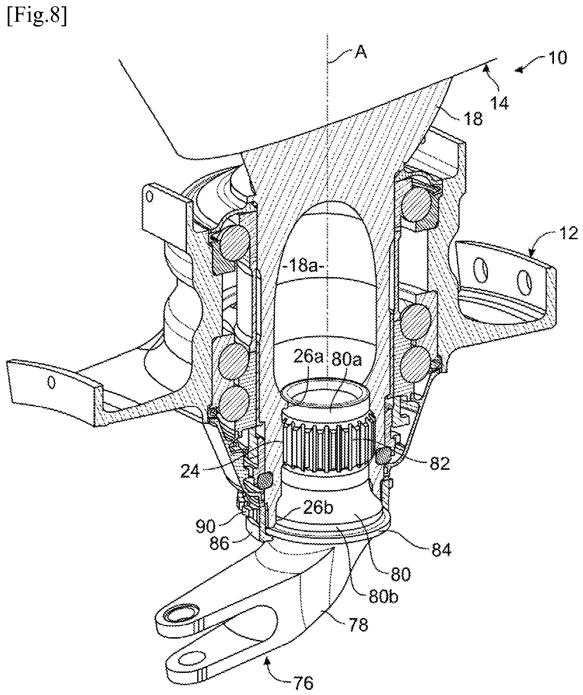

La figure 7 montre les cannelures 82 de la douille 80 et la figure 8 montre en outre une coupe de la bague filetée 86.

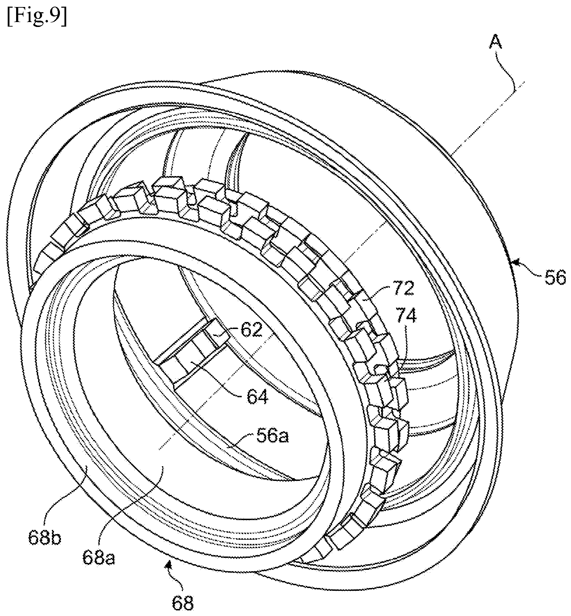

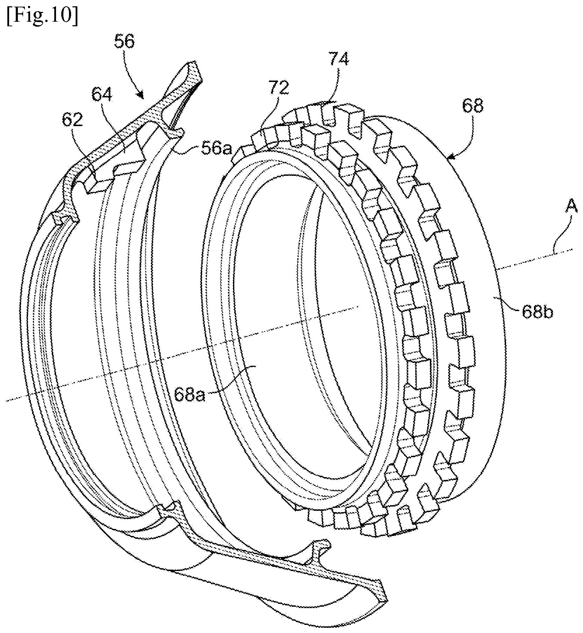

Les figures 9 et 10 montrent l'ensemble 68 avec ses séries de dents 72, 74. Elles montrent également les dents 62, 64 du capot 56. La dent 62 est ici alignée axialement avec la dent 64. En variante, le capot 56 pourrait comprendre deux dents 62 ou plus réparties autour de l'axe A, et deux dents 64 ou plus réparties autour de l'axe A.

Dans encore une autre variante non représentée, les paliers pourraient être des paliers à roulement à contacts obliques tels que des paliers à rouleaux coniques.

On va maintenant décrire un mode de réalisation d'un procédé de montage de l'hélice 10 selon l'invention. Ce procédé comprend les étapes suivantes, dans l'ordre, pour chacune des aubes 14 :
a) le montage des paliers 46, 48 dans l'orifice 12a du moyeu 12 ; comme évoqué dans ce qui précède, le palier 48 est engagé depuis l'intérieur du moyeu 12 dans l'orifice 12a, et le palier 46 est engagé depuis l'extérieur du moyeu dans l'orifice 12a.
b) l'insertion du pied 18 de l'aube 14 dans l'orifice 12a, de l'extérieur vers l'intérieur, jusqu'à ce que notamment la butée 28 du pied 18 prenne appui sur le palier externe 46 ou le capot externe 50 préalablement monté.
c) le montage de l'ensemble vis-écrou 68 sur le pied 18, entre la butée 28 et la gorge 32, soit par simple déplacement sur la surface 34a soit par vissage de la vis interne sur le filetage de cette surface 34a,
d) le montage de l'anneau sectorisé 68 dans la gorge 32 du pied 18,
e) le positionnement ou le dévissage de l'ensemble vis-écrou 68, et en particulier de la vis interne 68a, pour que la vis interne 68a prenne appui sur l'anneau sectorisé 66,
f) le vissage de l'écrou externe 68b sur la vis interne 68a pour que l'écrou externe 68b prenne appui sur le palier interne 48.

Dans le cas de la variante de la figure 5, l'entretoise 92 est montée dans l'orifice 12a, soit après le montage du palier 46 et avant le montage du palier 48, soit après le montage du palier 48 et avant le montage du palier 46.

Le procédé peut en outre comprendre, après l'étape f), une étape g) de montage du capot interne 56.

Le procédé peut en outre comprendre, après l'étape f), voire après l'étape g), une étape h) de montage du système de commande 76, puis une étape i) de montage de la bague filetée 86.

L'invention présente plusieurs avantages parmi lesquels : la suppression des pièces d'interface entre l'aube, les paliers et l'excentrique afin de limiter le nombre de pièces et la masse globale, la rétention de l'aube par l'anneau de rétention monté après descente de l'aube dans les paliers, le blocage ou l'immobilisation de l'anneau de rétention par l'ensemble vis-écrou après mise en place de la précontrainte, la mise en place de cet anneau de rétention par l'intérieur du moyeu ce qui permet un accès à 360° de l'outillage sur l'écrou et la vis de pré charge lorsque l'excentrique n'est pas installé.

## Revendications

1. Hélice (10) pour une turbomachine d'aéronef, cette hélice (10) comportant ;
- un moyeu (12) s'étendant autour d'un premier axe et comportant des orifices (12a) répartis autour de ce premier axe, chacun de ces orifices (12a) ayant une orientation sensiblement radiale par rapport audit premier axe et traversant ledit moyeu (12),
- des aubes (14) comportant chacune une pale (16) et un pied (18), les pieds (18) des aubes (14) étant respectivement engagés dans les orifices (12a) du moyeu (12) et chacune des aubes (14) comportant un axe de calage (A) sensiblement radial par rapport audit premier axe,
- des paliers (46, 48) de guidage des pieds (18) des aubes (14) dans les orifices (12a) du moyeu (12) autour desdits axes de calage (A), le pied (18) de chacune des aubes (14) étant guidé par au moins deux paliers (46, 48), respectivement radialement externe et interne vis-à-vis dudit premier axe, montés autour du pied (18) et à l'intérieur de l'orifice (12a) correspondant du moyeu (12), et
- des systèmes de retenue des pieds (18) des aubes (14) dans les orifices (12a) du moyeu (12) le long desdits axes de calage (A),
**caractérisée en ce que** le pied (18) de chacune des aubes (14) est configuré pour être engagé dans l'orifice (12a) correspondant du moyeu (12) par translation le long de l'axe de calage (A) de cette aube (14), radialement de l'extérieur vers l'intérieur vis-à-vis dudit premier axe, à l'intérieur des paliers externe et interne (46, 48), le pied de chacune des aubes (14) comportant :
+ une butée (28) configurée pour prendre appui en direction de l'axe de calage (A) sur le palier externe (48) afin de retenir l'aube (14) radialement vers l'intérieur vis-à-vis du premier axe,
+ une gorge annulaire (32) s'étendant autour de l'axe de calage (A) et orientée radialement vers l'extérieur par rapport à cet axe de calage (A), la gorge (32) étant située radialement à l'intérieur de la butée (28) vis-à-vis dudit premier axe, et
et **en ce que** le système de retenue du pied (18) de chacune des aubes (14) comprend :
+ un anneau (66), de préférence sectorisé, configuré pour être engagé dans la gorge (32) du pied (18) de l'aube (14), et
+ un ensemble annulaire vis-écrou (68) comportant une vis interne (68a) comprenant un filetage externe (68a1), et un écrou externe (68b) comportant un filetage interne (68b1) de vissage sur le filetage externe (68a1) de la vis interne (68a), la vis interne (68a) étant configurée pour être montée autour du pied (18), entre la butée (28) et la gorge (32), et pour prendre appui en direction de l'axe de calage (A) sur l'anneau (66) du côté opposé à la pale (16), et l'écrou externe (68b) étant configuré pour prendre appui en direction de l'axe de calage (A) sur le palier interne (48) du côté de la pale (16) de l'aube (14) afin de retenir l'aube (14) radialement vers l'extérieur vis-à-vis du premier axe.

2. Hélice (10) selon la revendication précédente, dans laquelle l'anneau (66) est sectorisé en deux morceaux et comprend deux demi-anneaux.

3. Hélice (10) selon l'une des revendications précédentes, dans laquelle l'anneau (66) comprend une périphérie interne logée dans la gorge (32) et une périphérie externe située à l'extérieur de la gorge (32) et sur laquelle la vis interne (68a) prend appui.

4. Hélice (10) selon la revendication 3, dans laquelle la périphérie interne de l'anneau (66) comporte un rebord annulaire (66a) situé du côté de la pale (16) qui est destiné à coopérer par appui avec la vis interne (68a) pour éviter à l'anneau (66) de sortir accidentellement de la gorge (32).

5. Hélice (10) selon la revendication 3, dans laquelle la vis interne (68a) comprend un rebord annulaire (70) qui est situé du côté opposé à la pale (16) et qui s'étend autour de la périphérie externe de l'anneau (66) pour éviter à l'anneau (66) de sortir accidentellement de la gorge (32).

6. Hélice (10) selon l'une des revendications précédentes, dans laquelle la vis interne (68a) et l'écrou externe (68b) comprennent chacun une série de dents (72, 74) orientées radialement vers l'extérieur par rapport à l'axe de calage (A).

7. Hélice (10) selon la revendication précédente, dans laquelle la série de dents (74) de l'écrou externe (68b) est située du côté de la pale (16) de l'aube (14), et la série de dents (72) de la vis interne (68a) est située du côté opposé à la pale (16) de l'aube (14).

8. Hélice (10) selon l'une des revendications précédentes, dans laquelle elle comprend en outre un capot annulaire interne (56) qui est monté autour du pied (18) et recouvre au moins en partie le palier interne (48) et/ou l'ensemble vis-écrou (68).

9. Hélice (10) selon la revendication précédente, en dépendance de la revendication 6 ou 7, dans laquelle le capot interne (56) comprend au moins deux dents (62, 64) qui sont configurées pour coopérer par engagement avec les séries de dents (72, 74) de l'ensemble vis-écrou (68) afin de les immobiliser en rotation autour de l'axe de calage (A).

10. Hélice (10) selon l'une des revendications précédentes, dans laquelle le pied (18) de chacune des aubes (14) comprend un évidement interne (18a) qui débouche radialement vers l'intérieur vis-à-vis du premier axe et qui comporte des cannelures internes (24) s'étendant autour de l'axe de calage (A), l'hélice (10) comportant en outre un système (76) de commande du calage qui est associé au pied (18) de chacune des aubes (14), le système de commande (76) comportant un excentrique (78) dont une douille (80) est engagée par translation en direction de l'axe de calage (A) à l'intérieur de l'évidement (18a), cette douille (80) comportant des cannelures externes (82) configurées pour être engagées dans les cannelures internes (24) du pied (18).

11. Hélice (10) selon l'une des revendications précédentes, dans laquelle le palier externe (46) comprend une bague externe qui prend appui en direction de l'axe de calage (A) et du côté opposé à la pale (16) sur une butée (40) située dans l'orifice (12a) du moyeu (12), et/ou le palier interne (48) comprend une bague externe qui prend appui en direction de l'axe de calage (A) et du côté de la pale (16) sur une butée (42) située dans l'orifice (12a) du moyeu (12).

12. Hélice (10) selon l'une des revendications précédentes, dans laquelle le palier externe (46) comprend une bague interne qui prend appui en direction de l'axe de calage (A) et du côté opposé à la pale (16) sur une entretoise (92) montée autour du pied (18) et dans l'orifice (12a) du moyeu (12), et/ou le palier interne (48) comprend une bague interne (48) qui prend appui en direction de l'axe de calage (A) et du côté de la pale (16) sur une butée (30) sur le pied (18) de l'aube (14) ou sur l'entretoise (92) précitée.

13. Turbomachine, en particulier d'aéronef, comportant au moins une hélice (10) selon l'une des revendications précédentes.

14. Procédé de montage d'une hélice (10) selon l'une des revendications 1 à 12, dans lequel il comprend les étapes de :
a) montage des paliers (46, 48) dans les orifices (12a) du moyeu (12),
b) insertion du pied (18) de chacune des aubes (14) dans l'orifice (12a) correspondant du moyeu (12), radialement de l'extérieur vers l'intérieur par rapport audit premier axe, jusqu'à ce que la butée (28) du pied (18) prenne appui sur le palier externe (48),
c) montage de l'ensemble vis-écrou (68) sur le pied (18) de l'aube (14), entre la butée (38) et la gorge (32),
d) montage de l'anneau (66) sectorisé dans la gorge (32) du pied (18),
e) positionnement de l'ensemble vis-écrou (68), et en particulier de la vis interne (68a), pour que la vis interne (68a) prenne appui sur l'anneau (66) sectorisé, et
f) vissage de l'écrou externe (68b) sur la vis interne (68a) pour que l'écrou externe (68b) prenne appui sur le palier interne (48).

15. Procédé selon la revendication 14, l'hélice étant telle que définie à la revendication 8 ou 9, dans lequel il comprend en outre, après l'étape f), une étape g) de montage du capot interne (56).

## Patentansprüche

1. Propeller (10) für ein Turbotriebwerk eines Luftfahrzeugs, wobei dieser Propeller (10) beinhaltet;
- eine Nabe (12), die sich um eine erste Achse herum erstreckt und Öffnungen (12a) beinhaltet, die um diese erste Achse herum verteilt sind, wobei jede dieser Öffnungen (12a) eine in Bezug auf die erste Achse im Wesentlichen radiale Ausrichtung aufweist und durch die Nabe (12) durchquert,
- Schaufeln (14), die jeweils ein Schaufelblatt (16) und einen Fuß (18) beinhaltet, wobei die Füße (18) der Schaufeln (14) jeweils in die Öffnungen (12a) der Nabe (12) eingreifen, und jede der Schaufeln (14) eine in Bezug zur ersten Achse im Wesentlichen radiale Verstellachse (A) beinhaltet,
- Lager (46, 48) zum Führen der Füße (18) der Schaufeln (14) in den Öffnungen (12a) der Nabe (12) um die Verstellachsen (A) herum, wobei der Fuß (18) einer jeden der Schaufeln (14) durch mindestens zwei jeweils radial äußere und innere Lager (46, 48) gegenüber der ersten Achse geführt wird, die um den Fuß (18) herum und im Inneren der Öffnung (12a) entsprechend der Nabe (12) montiert sind, und
- Rückhaltesysteme der Füße (18) der Schaufeln (14) in den Öffnungen (12a) der Nabe (12) entlang der Verstellachsen (A),
**dadurch gekennzeichnet, dass** der Fuß (18) einer jeden der Schaufeln (14) konfiguriert ist, um in die entsprechende Öffnung (12a) der Nabe (12) durch Vorschub entlang der Verstellachse(A) dieser Schaufel (14), radial von außen nach innen gegenüber der ersten Achse im Inneren des äußeren und inneren Lager (46, 48) einzugreifen, wobei der Fuß einer jeden der Schaufeln (14) beinhaltet:
- einen Anschlag (28), der konfiguriert ist, um sich in Richtung der Verstellachse (A) am äußeren Lager (48) anzulegen, um die Schaufel (14) gegenüber der ersten Achse radial nach innen zurückzuhalten,
- eine Ringnut (32), die sich um die Verstellachse (A) herum erstreckt, und in Bezug auf diese Verstellachse (A) radial nach außen ausgerichtet ist, wobei sich die Nut (32) radial innerhalb des Anschlags (28) gegenüber der ersten Achse befindet, und
dadurch, dass das Rückhaltesystem des Fußes (18) einer jeden der Schaufel (14) umfasst:
- einen vorzugsweise unterteilten Ring (66), der konfiguriert ist, um in die Nut (32) des Fußes (18) der Schaufel(14) einzugreifen, und
- eine ringförmige Schrauben-Mutter-Anordnung (68), die eine Innenschraube (68a) beinhaltet, die ein Außengewinde (68a1) umfasst, und eine Außenmutter (68b), die ein Innengewinde (68b1) zum Schrauben auf das Außengewinde (68a1) der Innenschraube (68a) beinhaltet, wobei die Innenschraube (68a) konfiguriert ist, um den Fuß (18) zwischen dem Anschlag (28) und der Nut (32) montiert zu werden, und um sich in Richtung der Verstellachse (A) am Ring (66) auf der gegenüberliegenden Seite zum Schaufelblatt (16) anzulegen, und die Außenmutter (68b) konfiguriert ist, um sich in Richtung der Verstellachse (A) am inneren Lager (48) auf Seiten des Schaufelblattes (16) der Schaufel (14) anzulegen, um die Schaufel (14) gegenüber der ersten Achse radial nach außen zurückzuhalten.

2. Propeller (10) nach dem vorstehenden Anspruch, wobei der Ring (66) in zwei Stücke unterteilt ist und zwei Halbringe umfasst.

3. Propeller (10) nach einem der vorstehenden Ansprüche, wobei der Ring (66) eine innere Peripherie umfasst, die in der Nut (32) aufgenommen ist, und eine äußere Peripherie, die sich außerhalb der Nut (32) befindet, und an der die Innenschraube (68a) anliegt.

4. Propeller (10) nach Anspruch 3, wobei die innere Peripherie des Ringes (66) einen ringförmigen Rand (66a) beinhaltet, der sich auf Seiten des Schaufelblattes (16) befindet, der dazu bestimmt ist, durch Anlegen mit der Innenschraube (68a) zusammenzuwirken, um zu verhindern, dass der Ring (66) unbeabsichtigt aus der Nut (32) austritt.

5. Propeller (10) nach Anspruch 3, wobei die Innenschraube (68a) einen ringförmigen Rand (70) umfasst, der sich auf der gegenüberliegenden Seite zum Schaufelblatt (16) befindet, der sich um die äußere Peripherie des Ringes (66) erstreckt, um zu verhindern, dass der Ring (66) unbeabsichtigt aus der Nut (32) austritt.

6. Propeller (10) nach einem der vorstehenden Ansprüche, wobei die Innenschraube (68a) und die Außenmutter (68b) jeweils eine Reihe von Zähnen (72, 74) umfassen, die in Bezug zur Verstellachse (A) radial nach außen ausgerichtet sind.

7. Propeller (10) nach dem vorstehenden Anspruch, wobei sich die Reihe von Zähnen (74) der Außenmutter (68b) auf Seiten des Schaufelblattes (16) der Schaufel (14) befindet, und sich die Reihe von Zähnen (72) der Innenschraube (68a) auf der gegenüberliegenden Seite zum Schaufelblatt (16) der Schaufel (14) befindet.

8. Propeller (10) nach einem der vorstehenden Ansprüche, wobei er weiter eine ringförmige innere Haube (56) umfasst, die um den Fuß (18) herum montiert ist, und mindestens teilweise das innere Lager (48) und/oder die Schrauben-Mutter-Anordnung (68) bedeckt.

9. Propeller (10) nach dem vorstehenden Anspruch, in Abhängigkeit von Anspruch 6 oder 7, wobei die innere Haube (56) mindestens zwei Zähne (62, 64) umfasst, die konfiguriert sind, um durch Eingreifen mit den Reihen von Zähnen (72, 74) der Schrauben-Mutter-Anordnung (68) zusammenzuwirken, um deren Drehung um die Verstellachse (A) herum zu blockieren.

10. Propeller (10) nach einem der vorstehenden Ansprüche, wobei der Fuß(18) einer jeden der Schaufeln (14) eine innere Aussparung (18a) umfasst, die gegenüber der ersten Achse radial ins Innere mündet, und die innere Rillen (24) beinhaltet, die sich um die Verstellachse (A) herum erstrecken, wobei der Propeller (10) weiter ein System (76) zum Steuern der Verstellung beinhaltet, das dem Fuß (18) einer jeden der Schaufeln (14) zugeordnet ist, wobei das System zum Steuern (76) einen Exzenter (78) beinhaltet, dessen eine Hülse (80) durch Vorschub in Richtung der Verstellachse (A) ins Innere der Aussparung (18a) eingreift, wobei diese Hülse (80) äußere Rillen (82) beinhaltet, die konfiguriert sind, um in die inneren Rillen (24) des Fußes (18) einzugreifen.

11. Propeller (10) nach einem der vorstehenden Ansprüche, wobei das äußere Lager (46) einen äußeren Ring umfasst, der sich in Richtung der Verstellachse (A) und auf der gegenüberliegenden Seite zum Schaufelblatt (16) an einen Anschlag (40) anlegt, der sich in der Öffnung (12a) der Nabe (12) befindet, und/oder das innere Lager (48) einen äußeren Ring umfasst, der sich in Richtung der Verstellachse (A) und auf Seiten des Schaufelblattes (16) an einen Anschlag (42) anlegt, der sich in der Öffnung (12a) der Nabe (12) befindet.

12. Propeller (10) nach einem der vorstehenden Ansprüche, wobei das äußere Lager (46) einen inneren Ring umfasst, der sich in Richtung der Verstellachse (A) und auf der gegenüberliegenden Seite zum Schaufelblatt (16) an einen Abstandhalter (92) anlegt, der um den Fuß (18) herum und in der Öffnung (12a) der Nabe (12) montiert ist, und/oder das innere Lager (48) einen inneren Ring (48) umfasst, der sich in Richtung der Verstellachse (A) und auf Seiten des Schaufelblattes (16) an einen Anschlag (30) auf dem Fuß (18) der Schaufel (14) oder auf dem zuvor genannten Abstandhalter (92) anlegt.

13. Turbotriebwerk, insbesondere eines Luftfahrzeugs, das mindestens einen Propeller (10) nach einem der vorstehenden Ansprüche beinhaltet.

14. Verfahren zum Montieren eines Propellers (10) nach einem der Ansprüche 1 bis 12, wobei es die Schritte umfasst zur:
a) Montage der Lager (46, 48) in den Öffnungen (12a) der Nabe (12),
b) Einführung des Fußes (18) einer jeden der Schaufeln (14) in die Öffnung (12a) entsprechend der Nabe (12), radial von außen nach innen in Bezug zur ersten Achse, bis sich der Anschlag (28) des Fußes (18) an das äußere Lager (48) anlegt,
c) Montage der Schrauben-Mutter-Anordnung (68) auf dem Fuß (18) der Schaufel (14), zwischen dem Anschlag (38) und der Nut (32),
d) Montage des unterteilten Ringes (66) in der Nut (32) des Fußes (18), e) Positionierung der Schrauben-Mutter-Anordnung (68), und insbesondere der Innenschraube (68a), damit sich die Innenschraube (68a) am unterteilten Ring (66) anlegt, und
f) Schrauben der Außenmutter (68b) auf die Innenschraube (68a), damit sich die Außenmutter (68b) am inneren Lager (48) anlegt.

15. Verfahren nach Anspruch 14, wobei der Propeller wie in Anspruch 8 oder 9 definiert ist, wobei es weiter nach dem Schritt f) einen Schritt g) zur Montage der inneren Haube (56) umfasst.

## Claims

1. A propeller (10) for an aircraft turbine engine, the propeller (10) comprising;
- a hub (12) extending around a first axis and comprising orifices (12a) distributed around this first axis, each of these orifices (12a) having a substantially radial orientation with respect to said first axis and passing through said hub (12),
- vanes (14) each comprising a blade (16) and a root (18), the roots (18) of the vanes (14) being respectively fitted into the orifices (12a) of the hub (12) and each of the vanes (14) comprising a pitch axis (A) substantially radial with respect to said first axis,
- bearings (46, 48) for guiding the roots (18) of the vanes (14) in the orifices (12a) of the hub (12) about said pitch axes (A), the root (18) of each of the vanes (14) being guided by at least two bearings (46, 48), radially external and internal respectively with respect to said first axis, mounted around the root (18) and inside the corresponding orifice (12a) of the hub (12), and
- systems for retaining the roots (18) of the vanes (14) in the orifices (12a) of the hub (12) along said pitch axes (A),
**characterised in that** the root (18) of each of the vanes (14) is configured so as to be fitted in the corresponding orifice (12a) of the hub (12) by translation along the pitch axis (A) of this vane (14), radially from the outside towards the inside with respect to said first axis, inside the external and internal bearings (46, 48), the root of each of the vanes (14) comprising:
+ an abutment (28) configured to rest in the direction of the pitch axis (A) on the external bearing (48) in order to retain the vane (14) radially inwards with respect to the first axis,
+ an annular groove (32) extending around the pitch axis (A) and oriented radially outwards with respect to this pitch axis (A), the groove (32) being located radially inside the abutment (28) with respect to said first axis, and
and **in that** the system for retaining the root (18) of each of the vanes (14) comprises:
+ a ring (66), preferably sectorized, configured to be fitted in the groove (32) of the root (18) of the vane (14), and
+ an annular screw-nut assembly (68) comprising an internal screw (68a) comprising an external thread (68a1), and an external nut (68b) comprising an internal thread (68b1) for screwing onto the external thread (68a1) of the internal screw (68a), the internal screw (68a) being configured to be mounted around the root (18), between the abutment (28) and the groove (32), and to rest in the direction of the pitch axis (A) on the ring (66) on the side opposite the blade (16), and the external nut (68b) being configured to rest in the direction of the pitch axis (A) on the internal bearing (48) on the side of the blade (16) of the vane (14) in order to retain the vane (14) radially outwards with respect to the first axis.

2. The propeller (10) according to the preceding claim, wherein the ring (66) is sectorized into two pieces and comprises two half-rings.

3. The propeller (10) according to one of the preceding claims, wherein the ring (66) comprises an internal periphery housed in the groove (32) and an external periphery located outside the groove (32) and on which the internal screw (68a) rests.

4. The propeller (10) according to claim 3, wherein the internal periphery of the ring (66) comprises an annular rim (66a) located on the side of the blade (16) which is intended to cooperate by resting on the internal screw (68a) to prevent the ring (66) from accidentally coming out of the groove (32).

5. The propeller (10) according to claim 3, wherein the internal screw (68a) comprises an annular rim (70) which is located on the opposite side to the blade (16) and which extends around the external periphery of the ring (66) to prevent the ring (66) from accidentally coming out of the groove (32).

6. The propeller (10) according to one of the preceding claims, wherein the internal screw (68a) and the external nut (68b) each comprise a series of teeth (72, 74) oriented radially outwards with respect to the pitch axis (A).

7. The propeller (10) according to the preceding claim, wherein the series of teeth (74) of the external nut (68b) is located on the side of the blade (16) of the vane (14), and the series of teeth (72) of the internal screw (68a) is located on the opposite side to the blade (16) of the vane (14).

8. The propeller (10) according to one of the preceding claims, wherein it further comprises an internal annular cowl (56) which is mounted around the root (18) and at least partially covers the internal bearing (48) and/or the screw-nut assembly (68).

9. The propeller (10) according to the preceding claim, in dependence on claim 6 or 7, wherein the internal cowl (56) comprises at least two teeth (62, 64) which are configured to cooperate by fitting with the series of teeth (72, 74) of the screw-nut assembly (68) in order to immobilise them in rotation about the pitch axis (A).

10. The propeller (10) according to one of the preceding claims, wherein the root (18) of each of the vanes (14) comprises an internal recess (18a) which opens radially inwards with respect to the first axis and which comprises internal splines (24) extending around the pitch axis (A), the propeller (10) further comprising a pitch control system (76) which is associated with the root (18) of each of the vanes (14), the control system (76) comprising an eccentric (78), a bushing (80) of which is fitted by translation in the direction of the pitch axis (A) inside the recess (18a), this bushing (80) comprising external splines (82) configured to be fitted in the internal splines (24) of the root (18).

11. The propeller (10) according to one of the preceding claims, wherein the external bearing (46) comprises an external ring element which rests in the direction of the pitch axis (A) and on the side opposite the blade (16) on an abutment (40) located in the orifice (12a) of the hub (12), and/or the internal bearing (48) comprises an external ring element which rests in the direction of the pitch axis (A) and on the side facing the blade (16) on an abutment (42) located in the orifice (12a) of the hub (12).

12. The propeller (10) according to one of the preceding claims, wherein the external bearing (46) comprises an internal ring element which rests in the direction of the pitch axis (A) and on the side opposite the blade (16) on a spacer (92) mounted around the root (18) and in the orifice (12a) of the hub (12), and/or the internal bearing (48) comprises an internal ring element (48) which rests in the direction of the pitch axis (A) and on the side facing the blade (16) on an abutment (30) on the root (18) of the vane (14) or on the aforementioned spacer (92).

13. A turbine engine, in particular for aircraft, comprising at least one propeller (10) according to one of the preceding claims.

14. A method for mounting a propeller (10) according to one of claims 1 to 12, wherein it comprises the steps of:
a) mounting the bearings (46, 48) in the orifices (12a) in the hub (12),
b) inserting the root (18) of each of the vanes (14) into the corresponding orifice (12a) of the hub (12), radially from the outside towards the inside with respect to said first axis, until the abutment (28) of the root (18) rests on the external bearing (48),
c) mounting the screw-nut assembly (68) on the root (18) of the vane (14), between the abutment (38) and the groove (32),
d) mounting the sectorized ring (66) in the groove (32) of the root (18),
e) positioning the screw-nut assembly (68), and in particular the internal screw (68a), so that the internal screw (68a) rests on the sectorized ring (66), and
f) screwing the external nut (68b) onto the internal screw (68a) so that the external nut (68b) rests on the internal bearing (48).

15. A method according to claim 14, the propeller being as defined in claim 8 or 9, wherein it further comprises, after step f), a step g) of mounting the internal cowl (56).
